# EUROPÄISCHE PATENTSCHRIFT

(11) **EP 3 463 952 B1**
(45) Veröffentlichungstag und Bekanntmachung des Hinweises auf die Patenterteilung: **09.07.2025**
(21) Anmeldenummer: 17717078.4
(22) Anmeldetag: 27.03.2017
(51) Int. Cl.: B60J 10/16, B60J 10/246, B60J 10/32, B60J 10/76

(54) **DICHTUNG FÜR EINE VERSENKBARE FENSTERSCHEIBE EINES FAHRZEUGTÜRFENSTERS**
SEAL FOR A LOWERABLE WINDOW PANE OF A VEHICLE DOOR WINDOW
JOINT POUR UNE VITRE COULISSANT VERTICALEMENT D'UNE FENÊTRE DE PORTE DE VÉHICULE

(30) Priorität: 03.06.2016 DE 102016110276
(43) Veröffentlichungstag der Anmeldung: 10.04.2019
(73) Patentinhaber: CQLT SaarGummi Technologies S.à.r.l., 5544 Remich (LU)
(72) Erfinder: ROUX, Sébastien, 76520 St-Aubin-Celloville (FR); SANS, Philippe, 28600 Luisant (FR)
(74) Vertreter: Patentanwälte Bernhardt / Wolff Partnerschaft mbB
(86) Internationale Anmeldenummer: PCT/EP2017/000372
(87) Internationale Veröffentlichungsnummer: WO 2017/207076

(56) Entgegenhaltungen:
- EP-A1- 0 021 069
- EP-A1- 0 021 069
- EP-A1- 0 654 371
- EP-A1- 1 500 542
- EP-A1- 1 500 542
- WO-A1-03/070501
- WO-A1-03/070501
- DE-A1- 3 512 973
- US-A- 5 209 019
- US-A- 5 209 019

## Beschreibung

Die Erfindung betrifft eine Dichtung zwischen einem Rahmenteil eines Fahrzeugtürfensters und dem oberen Rand einer versenkbaren Scheibe des Fahrzeugtürfensters.

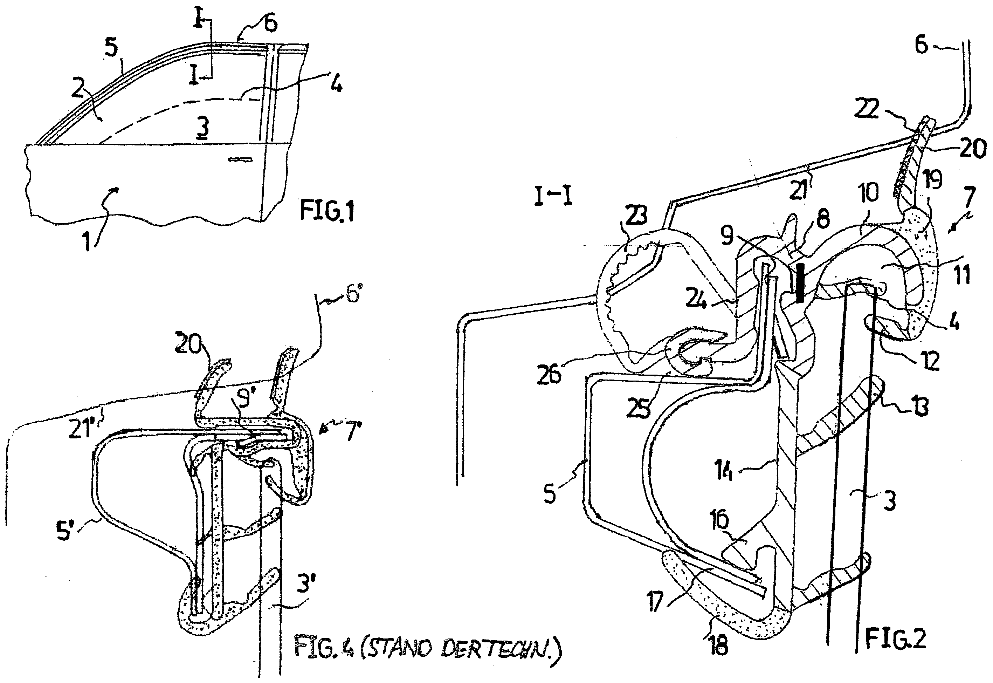

Gemäß Fig. 4 umfassen bekannte Dichtungen solcher Art ein Dichtungsprofil 7' aus EPDM- oder TPE-Material mit einer in Fig. 4 gepunktet dargestellten Querschnittsfläche. Das Dichtungsprofil 7' ist auf einen Flansch 9' aufgesteckt, der von einem oberen, in Fig. 4 im Querschnitt gezeigten Rahmenteil 5' senkrecht zur Ebene einer versenkbaren Fensterscheibe 3' vorsteht. Das Dichtungsprofil 7' weist ferner Dichtungslippen 20' auf, durch welche der obere Rahmenteil 5' gegen eine Randfläche 21' einer Türöffnung in einer Fahrzeugkarosserie 6' abdichtbar ist.

Aus US 5,209,019 ist eine Dichtung bekannt, welche ein Dichtungsprofil aus Kunststoff umfasst, das auf einen von einem Türrahmen nach oben vorstehenden Flansch aufgesteckt ist. Aus EP 0021069 A1, EP 1500542 A1 und WO 03/070501 A1 sind weitere Dichtungen zwischen einem Rahmenteil eines Fahrzeugtürfensters und einer Fensterscheibe bekannt. Aus EP 0654371 A1 und DE 3512973 A1 sind Dichtungen zur Abdichtung eines Rahmenteils eines Fahrzeugtürfensters gegenüber dem oberen Rand einer versenkbaren Fensterscheibe des Fahrzeugtürfensters bekannt, wobei zusätzlich ein schlauchförmiges Dichtungsprofil zur Bildung einer Dichtung zwischen dem Rahmenteil und einer Randfläche einer Türöffnung in einer Fahrzeugkarosserie vorgesehen ist.

Gegenüber diesem Stand der Technik wird durch die vorliegende Erfindung eine neue Dichtung der eingangs genannten Art mit einem Dichtungsprofil geschaffen, das sich bei vereinfachter Konstruktion des das Dichtungsprofil aufnehmenden oberen Rahmenteils des Fahrzeugtürfensters mit geringerem Aufwand als herkömmliche EPDM- oder TPE-Dichtungsprofile positionssicher am oberen Rahmenteil montieren lässt und das darüber hinaus eine deutliche Materialkosten- und Gewichtsersparnis mit sich bringt.

Diese Aufgabe wird durch eine Dichtung mit den Merkmalen des Anspruchs 1 gelöst.

Vorteilhaft lässt sich das Dichtungsprofil der Dichtung nach der Erfindung mit geringem Aufwand über einen U-förmigen Befestigungsabschnitt auf den Flansch aufstecken, wobei eine Biegung des oberen Rahmenteils und eine dem Flanschverlauf entsprechende Biegung des Dichtungsprofils für dessen sicheren Sitz auf dem Flansch sorgen können. Der Sitz lässt keine Verschiebung des Dichtungsprofils in Flanschlängsrichtung zu. Vorteilhaft kann so das Dichtungsprofil auch noch eine Türdichtung bilden, für die nach dem Stand der Technik ein gesondertes Dichtungsprofil erforderlich ist.

In einer bevorzugten Ausführungsform der Erfindung bildet ein äußerer U-Schenkel des U-förmigen Befestigungsabschnitts einen inneren Schenkel eines U-förmigen, den oberen Rand der Fensterscheibe aufnehmenden Rinnenabschnitts, wobei der genannte U-Schenkel den oberen Rand der Fensterscheibe von dem vertikal vorstehenden Flansch des oberen Rahmenteils fernhält.

Erfindungsgemäß ist der innere Schenkel des U-förmigen Befestigungsabschnitts mit dem Dichtungsabschnitt zur Bildung einer Dichtung zwischen dem oberen Rahmenteil und einer Randfläche einer Türöffnung in der Fahrzeugkarosserie verbunden.

Bei dem genannten Dichtungsabschnitt handelt es sich um einen schlauchförmigen Dichtungsabschnitt, der sich bei geschlossener Fahrzeugtür einer Türrahmenrandfläche anpasst und abdichtend gegen die Türrahmenrandfläche anliegt.

In einer weiteren Ausführungsform der Erfindung erstreckt sich vom oberen Ende des äußeren U-Profilschenkels des U-förmigen Rinnenabschnitts nach oben ein Dichtungsabschnitt, insbesondere eine Dichtungslippe, die für eine weitere Abdichtung des oberen Rahmenteils des Fahrzeugtürfensters gegen die Randfläche der Türöffnung in der Karosserie sorgt.

In einer besonders bevorzugten Ausführungsform der Erfindung, ist der den inneren U-Schenkel des Rinnenprofils bildende äußere U-Schenkel des Befestigungsabschnitts nach unten verlängert.

Diese Verlängerung weist zweckmäßig an ihrem freien Ende einen den Rahmenteil untergreifenden Zierleistenabschnitt auf. Neben an der Fensterscheibe anliegenden Dichtungslippen können an der Verlängerung ferner auf der den Dichtungslippen abgewandten Seite Einrichtungen zur weiteren Verbindung des Dichtungsprofils mit dem Rahmenschenkel angebracht sein, insbesondere ein Anschlagvorsprung.

In weiterer Ausgestaltung der Erfindung umfasst der äußere U-Schenkel des Rinnenabschnitts einen weiteren Zierleistenabschnitt.

In einer weiteren besonders bevorzugten Ausführungsform der Erfindung ist das Dichtungsprofil aus verschiedenen Thermoplasten hergestellt. Es versteht sich, dass z.B. der Befestigungsabschnitt aus einem besonders festen Thermoplastmaterial hergestellt ist, das die für diesen Abschnitt erforderlichen Träger-und Klemmfunktionen übernehmen kann. Dichtungslippen sind dagegen aus einem flexiblen Thermoplastmaterial, Zierleistenabschnitte aus entsprechend attraktive Oberflächen bildendem Thermoplastmaterial hergestellt.

In weiterer Ausgestaltung der Erfindung ist der Rinnenabschnitt wenigstens teilweise aus dem festen Thermoplastmaterial des Befestigungsabschnitts gebildet, so dass er große, durch den oberen Rand der Fensterscheibe übertragene Kräfte aufnehmen kann.

Die Herstellung des Dichtungsprofils erfolgt vorzugweise durch Mehrfachextrusion und anschließende Biegebearbeitung des Extrudats, so dass der Biegung oberer Rahmenteile entsprechend gebogene, biegungsfrei montierbare Dichtungsprofile entstehen.

Die Erfindung wird nachfolgend anhand eines Ausführungsbeispiels und der beiliegenden, sich auf dieses Ausführungsbeispiel beziehenden Zeichnungen weiter erläutert. Es zeigen:
- Fig. 1: eine die Anordnung einer erfindungsgemäßen Dichtung an einem Fahrzeug erläuternde Darstellung,
- Fig. 2: eine Dichtung nach der Erfindung in einer Querschnittsansicht,
- Fig. 3: ein Dichtungsprofil der Dichtung von Fig. 2, und
- Fig. 4: eine gattungsgemäße Dichtung nach dem Stand der Technik.

Eine in Fig. 1 gezeigte vordere Fahrzeugtür 1 mit einem Fenster 2 weist eine versenkbare Fensterscheibe 3 auf, die im geschlossenen Zustand des Fensters mit ihrem oberen Rand 4 gegen einen oberen Rahmenteil 5 des Fensters 2 abgedichtet ist. Eine Abdichtung besteht ferner zwischen dem oberen Rahmenteil 5 und einer Randfläche der durch die Fahrzeugtür 1 verschlossenen Türöffnung in einer in Fig. 1 ausschnittsweise gezeigten Fahrzeugkarosserie 6.

Wie aus Fig. 2 hervorgeht, dient zur Abdichtung ein Dichtungsprofil 7, dass über einen U-förmigen Befestigungsabschnitt 8 auf einen Flansch 9 des in Fig. 2 im Querschnitt gezeigten oberen Rahmenteils 5 aufgesteckt ist. Der Befestigungsabschnitt 8 besteht aus einem festen Thermoplastmaterial, dass eine Tragfunktion für weitere Profilabschnitte übernehmen sowie die zur Befestigung des Dichtungsprofils 7 an dem Flansch 9 erforderliche Klemmkraft aufbringen kann.

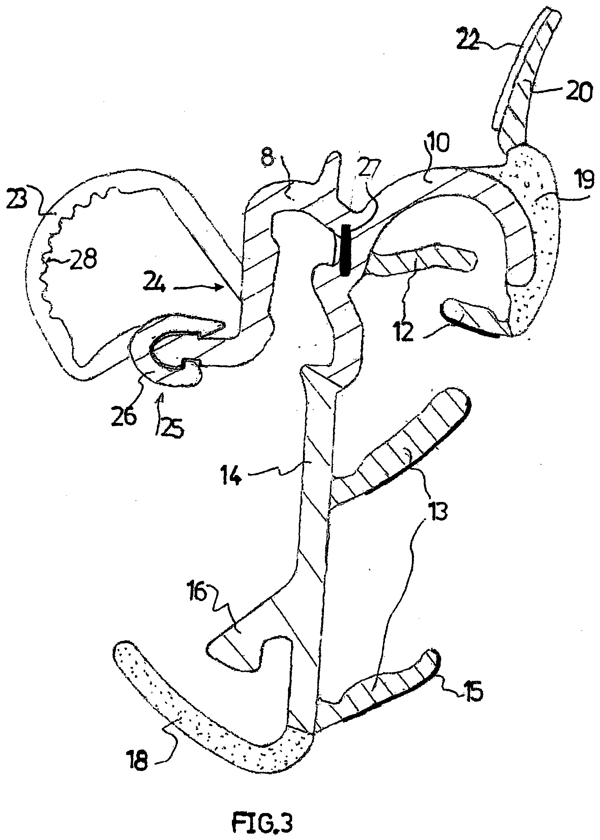

Wie die Fig. 2 und 3 zeigen, bildet das feste Thermoplastmaterial des U-förmigen Befestigungsabschnitts 8 einen wesentlichen Teil eines weiteren U-förmigen Profilabschnitts, nämlich eines Rinnenabschnitts 10, der eine Aufnahmerinne 11 für den oberen Rand 4 der Fensterscheibe 3 bildet. Der äußere U-Schenkel des U-förmigen Befestigungsabschnitts 8 ist sowohl Bestandteil des Befestigungsabschnitts 8 als auch des U-förmigen Rinnenabschnitts 10. Jeder der U-Schenkel des U-förmigen Rinnenabschnitts 10 weist eine Dichtungslippe 12 auf, wobei die Dichtungslippen 12 jeweils aus einem gegenüber dem festen Thermoplastmaterial des Befestigungsabschnitts 8 weicheren Thermoplastmaterial bestehen.

Weitere Dichtungslippen 13 aus solchem weichen Thermoplastmaterial stehen von einer Verlängerung 14 des äußeren U-Schenkels des U-förmigen Befestigungsabschnitts 8 bzw. inneren U-Schenkel des U-förmigen Rinnenabschnitts 10 vor. Die Dichtungslippen 12,13 weisen auf ihrer der Fensterscheibe 3 zugewandten Seite eine Gleitbeschichtung 15 aus einem dritten Thermoplastmaterial mit geeigneten Gleiteigenschaften auf.

Die Verlängerung 14 selbst besteht in dem gezeigten Beispiel aus einem vierten Thermoplastmaterial, das gegenüber dem Thermoplastmaterial des Befestigungsabschnitts 8 geminderten Festigkeitsanforderungen genügt. Auf der den Dichtungslippen 13 abgewandten Seite der Verlängerung 14 steht ein Anschlag 16 vor, welcher der Befestigung des Dichtungsprofils 7 an dem oberen Rahmenteil 5 dient und über welchen das Dichtungsprofil 7 an einem weiteren Flansch des oberen Rahmenteils 5 anliegt.

An das freie Ende der Verlängerung 14 schließt sich ein Zierleistenabschnitt 18 an, der den Flansch 17 des oberen Rahmenteils verdeckt und aus einem fünften Thermoplastmaterial besteht, das eine optisch attraktive Sichtfläche bildet. Ein weiterer aus solchem Thermoplastmaterial bestehender Zierleistenabschnitt 19 ist mit dem äußeren U-Schenkel des Rinnenabschnitts 10 verbunden und bildet zudem einen Endabschnitt dieses äußeren U-Schenkels.

An den äußeren U-Schenkel schließt sich nach oben eine weitere Dichtungslippe 20 an, durch welche der obere Rahmenteil 5 gegen eine Randfläche 21 der Türöffnung in der Fahrzeugkarosserie 6 abgedichtet ist. Die Dichtungslippe 20 weist auf ihrer der Randfläche 21 zugewandten Seite eine Gleitbeschichtung 22 aus einem sechsten Thermoplastmaterial mit besonderen Gleiteigenschaften gegenüber Lack auf. Die Dichtungslippe 20 besteht im Übrigen aus dem gleichen Material wie die Dichtungslippen 12,13. Bei der Gleitbeschichtung 22 handelt es sich in dem gezeigten Beispiel um eine Beflockungsschicht.

Der innere U-Schenkel des U-förmigen Befestigungsabschnitts 8 ist mit einem schlauchförmigen Dichtungsabschnitt 23 verbunden, welcher der weiteren Abdichtung des oberen Rahmenteils 5 gegen die Fahrzeugkarosserie 6 dient und gegen die Randfläche 21 der Türöffnung zur Anlage kommt. Der Dichtungsabschnitt 23 besteht aus einem siebenten Thermoplastmaterial, das in besondere, Maße dynamischen Beanspruchungen widersteht.

Das vorangehend beschriebene Dichtungsprofil 7, das in dem gezeigten Beispiel in Anpassung an den oberen Rahmenteil 5 eine gebogene Form aufweist, ist durch Mehrfachextrusion und anschießende Biegebearbeitung des abkühlenden Extrudats hergestellt, wobei die verschiedenen, aus unterschiedlichen Thermoplastmaterialien bestehenden Profilabschnitte durch Aneinanderextrudieren stoffschlüssig miteinander verbunden werden.

Die Wand des schlauchförmigen Dichtungsabschnitts 23 ist nur bei 24 stoffschlüssig mit dem inneren U-Schenkel des U-förmigen Befestigungsabschnitts 8 verbunden, bei 25 ist hingegen eine eingerastete Formschlussverbindung hergestellt. Die Wand des Dichtungsabschnitts 23 ist an den inneren U-Schenkel des U-förmigen Befestigungsabschnitts 8 sowie an ein Endstück 26 anextrudiert, das ebenfalls aus dem festen Thermoplastmaterial des U-förmigen Befestigungsabschnitts 8 besteht. Die Formschlussverbindung ist notwendig, weil sich ein bereits geschlossen extrudierter schlauchförmiger Dichtungsabschnitt keiner nachträglichen Biegebearbeitung unterziehen ließe. Die Wand des schlauchförmigen Dichtungsabschnitts 23 ist durch einen Bereich mit Einkerbungsrinnen 28 über den Schlauchumfang unterschiedlich flexibel derart ausgebildet, dass sich bei Herstellung der Formschlussverbindung 25 eine gewünschte Schlauchform einstellt.

Der Befestigungsabschnitt 8, der Rinnenabschnitt 10 und das Endstück 26 können aus dem gleichen harten Thermoplastmaterial bestehen, z.B. PP-Ionomer, PP-Copolymer oder glasfaserverstärktem PP.

Für die Dichtungslippen 12,13 und 20 kommt jeweils weiches Thermoplastmaterial mit einer Härte zwischen 55 und 75A in Betracht, z.B. TPV oder TPS.

Die Verlängerung 14 mit dem Anschlag 16 besteht vorzugsweise aus einem weichen Thermoplastmaterial mit einer Härte zwischen 75 und 90A.

Für den Dichtungsabschnitt 23 kommt ein sehr weiches Thermoplastmaterial mit einer Härte zwischen 35 und 50A in Betracht.

Sowohl die Verlängerung 14 als auch der Dichtungsabschnitt 23 können wie die Dichtungslippen 12, 13, 20 als Basismaterial TPV oder TPS aufweisen.

Die Zierleistenabschnitte 18 und 19 bestehen aus einem eine dekorative, kratzfeste Oberfläche bildenden Material mit einer Härte zwischen 55 und 90A, z.B. aus TPV, TPS, PP, PA, einer Legierung aus PA und PP oder einem lonomer.

Mit 27 ist eine in dem betreffenden Beispiel als Aluminiumstreifen ausgebildete Metalleinlage bezeichnet, die in das harte Material des Befestigungsabschnitts 8 bzw. Rinnenabschnitts 10 eingebettet ist. Die Metalleinlage 27 dient zur Begrenzung der Wärmeausdehnung des Dichtungsprofils 7 und ist in dem gezeigten Beispiel in einem zentralen Bereich des aus dem harten Material gebildeten Dichtungsstrangabschnitts angeordnet.

Der Herstellungsprozess des vorangehend beschriebenen Dichtungsstrangs erfordert zumindest fünf verschiedene Extrusionseinrichtungen, um die Dichtungsabschnitte aneinander zu extrudieren. Vorzugsweise werden sechs verschiedene Extruder eingesetzt.

## Patentansprüche

1. Dichtung zwischen einem Rahmenteil (5) eines Fahrzeugtürfensters (2) und dem oberen Rand (4) einer versenkbaren Fensterscheibe (3) des Fahrzeugtürfensters (2), mit einem Dichtungsprofil (7) aus Kunststoff, das auf einen von dem Rahmenteil (5) des Fahrzeugtürfensters (2) nach oben vorstehenden Flansch (9) über einen U-förmigen Befestigungsabschnitt (8) aufgesteckt ist, wobei zusätzlich das Dichtungsprofil (7) mit einem schlauchförmigen Dichtungsabschnitt (23) zur Bildung einer Dichtung zwischen dem Rahmenteil (5) und einer Randfläche (21) einer Türöffnung in einer Fahrzeugkarosserie (6) vorgesehen ist,
**dadurch gekennzeichnet,**
**dass** der Dichtungsabschnitt (23) mit einem inneren Schenkel des U-förmigen Befestigungsabschnitts (8) verbunden ist, wobei eine Wand des schlauchförmigen Dichtungsabschnitts (23) im Querschnitt an einem ersten Ende an den inneren Schenkel anextrudiert ist und an einem entgegengesetzten Ende eine eingerastete Formschlussverbindung mit dem inneren U-Schenkel des U-förmigen Befestigungsabschnitts (8) hergestellt ist.

2. Dichtung nach Anspruch 1,
**dadurch gekennzeichnet,**
**dass** ein äußerer U-Schenkel des U-förmigen Befestigungsabschnitts (8) als innerer U-Schenkel eines U-förmigen, eine Aufnahmerinne (11) für den oberen Rand (4) der Fensterscheibe (3) bildenden Rinnenabschnitts (10) dient.

3. Dichtung nach Anspruch 1 oder 2,
**dadurch gekennzeichnet,**
**dass** das Dichtungsprofil (7) eine die Wärmeausdehnung begrenzende Metalleinlage (27) aufweist.

4. Dichtung nach Anspruch 2 oder 3,
**dadurch gekennzeichnet,**
**dass** von sich vom oberen Ende eines äußeren U-Profilschenkels des U-förmigen Rinnenabschnitts (10) nach oben ein Dichtungsabschnitt, insbesondere eine Dichtungslippe (20), erstreckt.

5. Dichtung nach einem der Ansprüche 2 bis 4,
**dadurch gekennzeichnet,**
**dass** den inneren U-Profilschenkel des Rinnenabschnitts (10) bildende äußere Schenkel des Befestigungsabschnitts (8) nach unten verlängert ist.

6. Dichtung nach Anspruch 4 oder 5,
**dadurch gekennzeichnet,**
**dass** die Verlängerung (14) an ihrem freien Ende mit einem den Rahmenteil (5) untergreifenden Zierleistenabschnitt (18) verbunden ist.

7. Dichtung nach Anspruch 6,
**dadurch gekennzeichnet,**
**dass** die Verlängerung (14) neben die Fensterscheibe (3) abdichtenden Dichtungslippen (13) Einrichtungen zur Verbindung mit dem Rahmenteil (5), insbesondere einen Anschlagvorsprung (16), aufweist.

8. Dichtung nach einem der Ansprüche 2 bis 7,
**dadurch gekennzeichnet,**
**dass** der äußere U-Schenkel des Rinnenabschnitts (10) einen Zierleistenabschnitt (19) umfasst.

9. Dichtung nach einem der Ansprüche 1 bis 8,
**dadurch gekennzeichnet,**
**dass** das Dichtungsprofil (7) aus verschiedenen Thermoplastmaterialien hergestellt ist.

10. Dichtung nach Anspruch 9,
**dadurch gekennzeichnet,**
**dass** der Rinnenabschnitt (10) wenigstens teilweise aus dem Thermoplastmaterial besteht, aus welchem der Befestigungsabschnitt (8) hergestellt ist.

11. Dichtung nach einem der Ansprüche 1 bis 10,
**dadurch gekennzeichnet,**
**dass** das Dichtungsprofil (7) durch Mehrfachextrusion und anschließende Biegebearbeitung des Extrudats gebildet ist.

## Claims

1. Seal between a frame part (5) of a vehicle door window (2) and the upper periphery (4) of a lowerable window pane (3) of the vehicle door window (2), having a seal profile (7) of plastic which by way of a U-shaped fastening portion (8) is plug-fitted onto a flange (9) that projects upward from the frame part (5) of the vehicle door window (2), wherein additionally the seal profile (7) is provided with a tubular sealing portion (23) for forming a seal between the frame part (5) and a peripheral face (21) of a door opening in a vehicle body (6),
**characterized in that**
the sealing portion (23) is connected to an inner leg of the U-shaped fastening portion (8), wherein a wall of the tubular sealing portion (23) is extruded in cross-section at a first end onto the internal leg, and at an opposite end a latched form-fitting connection to the internal U-leg of the U-shaped fastening portion (8) is established.

2. Seal according to Claim 1,
**characterized in that**
an external U-leg of the U-shaped fastening portion (8) serves as an internal U-leg of a U-shaped groove portion (10) that forms a receptacle groove (11) for the upper periphery (4) of the window pane (3).

3. Seal according to Claim 1 or 2,
**characterized in that**
the seal profile (7) has a metal insert (27) that delimits the thermal expansion.

4. Seal according to Claim 2 or 3,
**characterized in that**
a seal portion, in particular a seal lip (20), extends upward from the upper end of an external U-profile leg of the U-shaped groove portion (10).

5. Seal according to one of Claims 2 to 4,
**characterized in that**
the external leg of the fastening portion (8) that forms the internal U-profile leg of the groove portion (10) is extended downward in terms of length.

6. Seal according to Claim 4 or 5,
**characterized in that**
the extension (14) at the free end thereof is connected to a trim strip portion (18) that engages below the frame part (5).

7. Seal according to Claim 6,
**characterized in that**
the extension (14), apart from seal lips (13) that seal the window pane (3), has means, in particular a detent protrusion (16), for connecting to the frame part (5).

8. Seal according to one of Claims 2 to 7,
**characterized in that**
the external U-leg of the groove portion (10) comprises a trim strip portion (19).

9. Seal according to one of Claims 1 to 8,
**characterized in that**
the seal profile (7) is produced from various thermoplastic materials.

10. Seal according to Claim 9,
**characterized in that**
at least in parts the groove portion (10) is composed of the thermoplastic material from which the fastening portion (8) is produced.

11. Seal according to one of Claims 1 to 10,
**characterized in that**
the seal profile (7) is formed by multiple extrusion and subsequent bending of the extruded product.

## Revendications

1. Joint d'étanchéité entre une partie de cadre (5) d'une fenêtre de portière de véhicule (2) et le bord supérieur (4) d'une vitre escamotable (3) de la fenêtre de portière de véhicule (2), comprenant un profilé d'étanchéité (7) en matière plastique qui est emboîté, par l'intermédiaire d'une portion de fixation (8) en forme de U, sur une bride (9) dépassant vers le haut de la partie de cadre (5) de la fenêtre de portière de véhicule (2), le profilé d'étanchéité (7) étant pourvu en supplément d'une portion d'étanchéité (23) en forme de tuyau pour former un joint d'étanchéité entre la partie de cadre (5) et une surface de bord (21) d'une baie de portière dans une carrosserie de véhicule (6),
**caractérisé en ce que**
la portion d'étanchéité (23) est reliée à une aile intérieure de la portion de fixation (8) en forme de U, et, à une première extrémité en section transversale, une paroi de la portion d'étanchéité (23) en forme de tuyau est conformée par extrusion sur l'aile intérieure et, à une extrémité opposée, une liaison enclenchée par complémentarité de forme est établie avec l'aile intérieure du U de la portion de fixation (8) en forme de U.

2. Joint d'étanchéité selon la revendication 1,
**caractérisé en ce que**
une aile extérieure du U de la portion de fixation (8) en forme de U sert d'aile intérieure du U d'une portion de rainure (10) en forme de U formant une rainure (11) pour le bord supérieur (4) de la vitre (3).

3. Joint d'étanchéité selon la revendication 1 ou 2,
**caractérisé en ce que**
le profilé d'étanchéité (7) comprend un insert métallique (27) limitant la dilatation thermique.

4. Joint d'étanchéité selon la revendication 2 ou 3,
**caractérisé en ce que**
une portion d'étanchéité, en particulier une lèvre d'étanchéité (20), s'étend vers le haut à partir de l'extrémité supérieure d'une aile extérieure du profilé en U de la portion de rainure (10) en forme de U.

5. Joint d'étanchéité selon l'une des revendications 2 à 4,
**caractérisé en ce que**
l'aile extérieure de la portion de fixation (8) formant l'aile intérieure du profilé en U de la portion de rainure (10) est prolongée vers le bas.

6. Joint d'étanchéité selon la revendication 4 ou 5,
**caractérisé en ce que**
le prolongement (14) est relié, à son extrémité libre, à une portion d'enjoliveur (18) qui engage par le dessous la partie de cadre (5).

7. Joint d'étanchéité selon la revendication 6,
**caractérisé en ce que**
le prolongement (14) présente, outre des lèvres d'étanchéité (13) assurant l'étanchéité de la vitre (3), des dispositifs de liaison avec la partie de cadre (5), en particulier une saillie de butée (16).

8. Joint d'étanchéité selon l'une des revendications 2 à 7,
**caractérisé en ce que**
l'aile extérieure du U de la portion de rainure (10) comprend une portion d'enjoliveur (19).

9. Joint d'étanchéité selon l'une des revendications 1 à 8,
**caractérisé en ce que**
le profilé d'étanchéité (7) est réalisé en différents matériaux thermoplastiques.

10. Joint d'étanchéité selon la revendication 9,
**caractérisé en ce que**
la portion de rainure (10) est au moins partiellement constituée du matériau thermoplastique dans lequel la portion de fixation (8) est réalisée.

11. Joint d'étanchéité selon l'une des revendications 1 à 10,
**caractérisé en ce que**
le profilé d'étanchéité (7) est formé par extrusion multiple, suivie d'un cintrage du produit extrudé.
